# EUROPÄISCHE PATENTSCHRIFT

(11) **EP 1 078 567 B1**
(45) Veröffentlichungstag und Bekanntmachung des Hinweises auf die Patenterteilung: **24.03.2004**
(21) Anmeldenummer: 00116984.6
(22) Anmeldetag: 08.08.2000
(51) Int. Cl.: A01D 45/02

(54) **Erntegerät zum Ernten von Maiskolben oder dgl. Körnerfrüchten**
Apparatus for harvesting corn or similar grain
Appareil à moissonner des épis de mais ou grains similaires

(30) Priorität: 21.08.1999 DE 19939723
(43) Veröffentlichungstag der Anmeldung: 28.02.2001
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke, Dr.

(56) Entgegenhaltungen:
- EP-A- 0 378 277
- EP-A- 0 503 468
- EP-A- 0 673 594
- EP-A- 0 760 200
- DE-A- 19 615 882
- FR-A- 1 452 511

## Beschreibung

Die Erfindung betrifft ein Erntegerät zum Ernten von Maiskolben oder dgl. Körnerfrüchten für einen Anbau an ein selbstfahrendes landwirtschaftliches Erntefahrzeug, insbesondere einen Mähdrescher oder Feldhäcksler, in einer Ausgestaltung gemäß dem Oberbegriff des Anspruchs 1.

Bei bekannten Erntegeräten dieser Art haben die Pflückvorrichtungen für die Maiskolben eine Ausbildung, die nur eine reihenförmige Aufnahme der üblicherweise in Reihe wachsenden Maispflanzen ermöglicht. Dies ist durch die Ausbildung des Pflückspaltes mit einer Längserstreckung in Fahrtrichtung des Erntefahrzeugs und eine Anordnung der Pflückwalze oder -walzen unterhalb des Pflückspaltes mit ihrerseits in Fahrtrichtung ausgerichteten Drehachsen bedingt.

Diese reihenabhängige Arbeitsweise erschwert den Erntebetrieb bereits bei uneinheitlichen Reihenabständen der Pflanzen auf dem Feld und mehr noch bei einer Aufnahme von Lagermais mit unregelmäßig am Boden liegenden Stengeln. Insbesondere ist aber ein Fahrbetrieb des Erntefahrzeugs quer zu den Pflanzenreihen, wie es sich für einen zügigen Erntebetrieb empfehlen kann, bei den bekannten Pflückvorrichtungen durch die reihenbezogene Ausbildung des Pflückspaltes weitgehend ausgeschlossen.

Der Erfindung liegt die Aufgabe zugrunde, ein Erntegerät zum Ernten von Maiskolben oder dgl. Körnerfrüchten für einen Anbau an ein selbstfahrendes landwirtschaftliches Erntefahrzeug, insbesondere einen Mähdrescher oder Feldhäcksler, der eingangs angegebenen Art zu schaffen, dessen Pflückvorrichtung so ausgebildet ist, daß ein reihenunabhängiges Aufnehmen der Pflanzen und Abpflücken der Maiskolben bzw. Körnerfrüchte von ihren Stengeln möglich ist.

Diese Aufgabe wird nach der Erfindung durch eine Ausgestaltung der Pflückvorrichtung gemäß dem kennzeichnenden Teil des Anspruchs 1 gelöst. Weitere, vorteilhafte Ausgestaltungen ergeben sich aus den Unteransprüchen.

Dadurch, daß nach der Erfindung die Kolbenhalteeinrichtung aus einer oder mehreren um eine Hochachse drehbaren Pflückscheiben besteht, in denen jeweils zumindest ein Pflückspalt, vorzugsweise eine Mehrzahl von Pflückspalten gebildet ist, kann eine reihenunabhängige Aberntung des Feldes aufgrund der ihrerseits in Drehrichtung der Pflückscheiben umlaufenden Pflückspalte erfolgen, die demgemäß nicht, wie bei den bekannten Pflückvorrichtungen, eine vorrichtungsfeste Ausrichtung in Fahrtrichtung aufweisen, sondern bei ihrer Umlaufbewegung den Maisstengel reihenunabhängig im Bereich eines in Fahrtrichtung des Erntefahrzeugs vorauslaufenden Bewegungssektors der Pflückscheibe erfassen und bei der fortgesetzten Drehbewegung der Pflückscheibe in den Pflückspalt nach innen zum Drehpunkt der Pflückscheibe hin einbringen. Die sodann mit Hilfe der unterhalb der Pflückspalte angeordneten Pflückwalze abgerissenen Maiskolben können mit Hilfe der von der oberseitigen Abdeckeinrichtung gebildeten Förderkanäle zum Erntefahrzeug hin abtransportiert werden, um entweder einem Mähdrescher oder Feldhäcksler als Erntefahrzeug zur Weiterverarbeitung zugeführt zu werden. Grundsätzlich ist aber auch eine Verbindung mit einem anderen selbstfahrenden landwirtschaftlichen Erntefahrzeug möglich, das die abgepflückten Maiskolben oder dgl. Körnerfrüchte lediglich sammelt, um sie anderenorts der Weiterverwendung zuzuführen.

Die Erfindung ist mit weiteren Einzelheiten in der nachfolgenden Beschreibung in Verbindung mit der Zeichnung näher erläutert, in der ein Ausführungsbeispiel des Gegenstands der Erfindung schematisch veranschaulicht ist. In der Zeichnung zeigt:
- Fig. 1: eine Vorderansicht eines Erntegeräts zum Ernten von Maiskolben oder dgl. Körnerfrüchten als Anbau- bzw. Vorsatzgerät an einem selbstfahrenden landwirtschaftlichen Erntefahrzeug,
- Fig. 2: einen Querschnitt durch das mit dem Erntefahrzeug verbundene Erntegerät gemäß Fig. 1,
- Fig. 3: eine Draufsicht auf eine Einzelheit der bei dem Erntegerät nach den Fig. 1 und 2 Verwendung findenden Pflückvorrichtung,
- Fig. 4: einen Querschnitt durch die Einzelheit der Pflückvorrichtung gemäß Fig. 3 und
- Fig. 5: wiederum eine Einzelheit der Pflückvorrichtung in Verbindung mit einer Maispflanze in perspektivischer Darstellung.

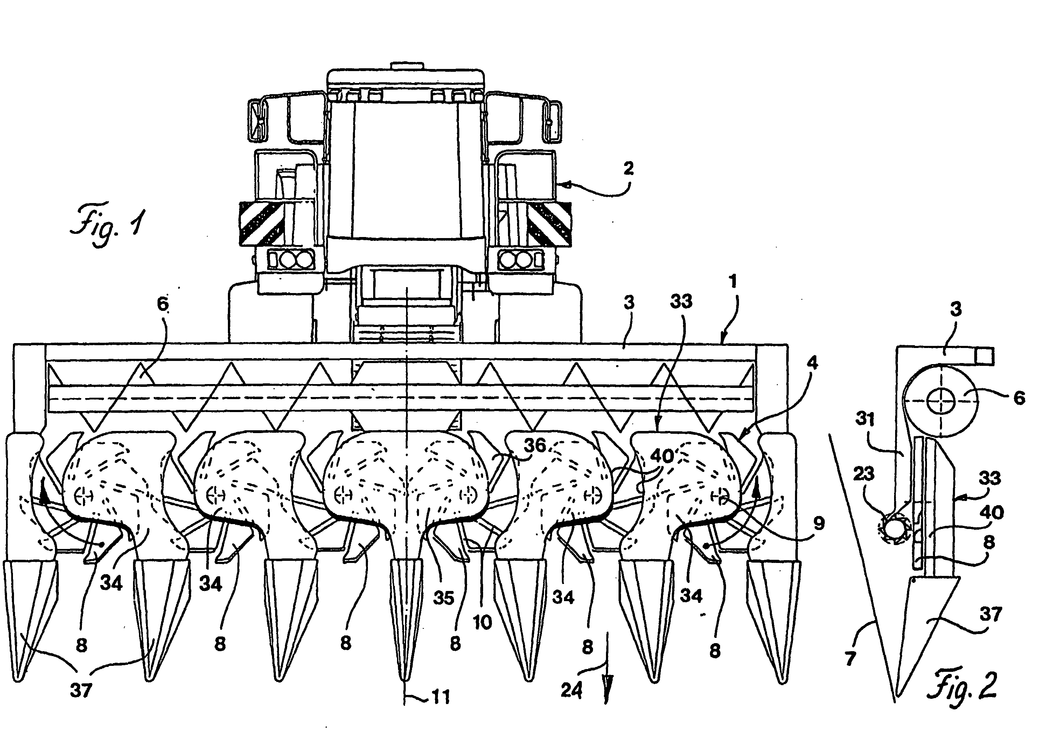

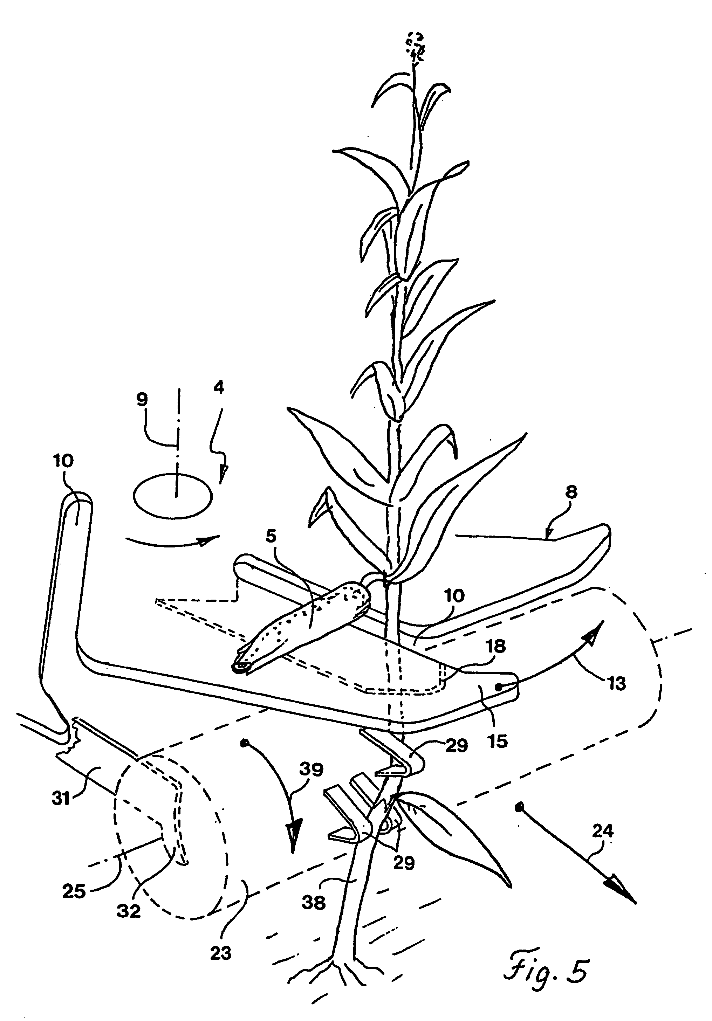

In Fig.1 ist ein als Ganzes mit 1 bezeichnetes Erntegerät zum Ernten von Maiskolben oder dgl. Körnerfrüchten dargestellt, das als Vorsatzgerät an ein selbstfahrendes landwirtschaftliches Erntefahrzeug 2, bei dem dargestellten Beispiel einen Mähdrescher, angebaut ist. An einem Grundrahmen 3 des Erntegeräts 1 ist eine Pflückvorrichtung 4 abgestützt, mit der bei dem dargestellten Beispiel Maiskolben 5 (Fig. 4 und 5) von den Stengeln der Maispflanzen abgepflückt und über eine Querförderschnecke 6 dem Fahrzeug 2 zugeführt werden. Für den Erntebetrieb ist das Erntegerät 1 insgesamt in einem spitzen Winkel nach vorn geneigt am Fahrzeug 2 abgestützt, wie dies in Fig. 2 durch eine Bodenlinie 7 versinnbildlicht ist.

Die Pflückvorrichtung 4 umfaßt bei dem dargestellten Beispiel eine Mehrzahl von Pflückscheiben 8, die um eine Hochachse 9 drehbar sind und ihrerseits gemäß dem dargestellten Beispiel jeweils eine Mehrzahl von in Drehrichtung 13 umlaufenden Pflückspalten 10 aufweisen. Bei dem dargestellten Beispiel sind sechs Pflückscheiben 8 vorgesehen, deren Hochachsen 9 in einer gemeinsamen vertikalen Querebene der Pflückvorrichtung 4 angeordnet sind. Dabei sind jeweils drei Pflückscheiben 8 zu beiden Seiten der vertikalen Längsmittelebene 11 der Pflückvorrichtung.4 angeordnet. Wie in Fig. 1 durch Bewegungspfeile angedeutet, laufen die Pflückscheiben 8 auf der einen Seite der vertikalen Längsmittelebene 11 im Uhrzeigersinn und auf der anderen Seite entgegen dem Uhrzeigersinn um.

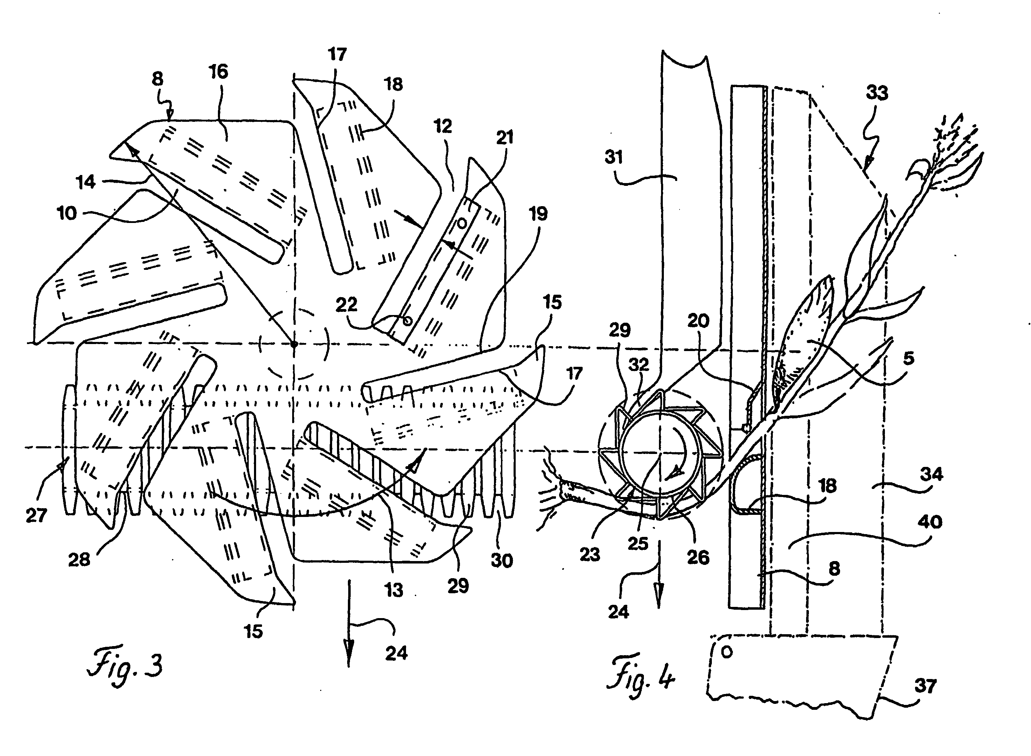

Wie insbesondere aus Fig. 3 ersichtlich ist, die eine einzelne Pflückscheibe 8 zeigt, sind bei dem dargestellten Beispiel jeweils acht Pflückspalte 10 in den Pflückscheiben 8 gebildet, die am Außenumfang der Pflückscheibe 8 offen ausmünden. Die Pflückspalte 10 weisen eine radiale Grundausrichtung auf, wobei sie jedoch bei dem dargestellten Beispiel, ausgehend von ihrer äußeren Ausmündung 12, eine entgegen der Drehrichtung 13 der Pflückscheibe 8 divergierende Ausrichtung in bezug auf einen durch den Ausmündungsbereich verlaufenden Radius 14 der Pflückscheibe 8 aufweisen. Diese Ausbildung verbessert den Mitnahmeeffekt für die erfaßten Maisstengel. Eine Eingriffsnase 15 in jedem zwischen zwei Pflückspalten 10 gebildeten Pflückscheibensegment 16 erstreckt sich in Drehrichtung 13 der Pflückscheibe 8 und übergreift bereichsweise die Ausmündung 12 jedes Pflückspaltes 10, wodurch das Erfassen eines Maisstengels beim Umlauf der Pflückscheibe 8 und dessen Einführung in den jeweiligen Pflückspalt 10 begünstigt werden.

Entlang dem in Drehrichtung 13 nachlaufenden Längsrand 17 jedes Pflückspaltes 10 ist die Pflückscheibe 8 unterseitig mit einer Druckleiste 18 versehen, die, wie insbesondere Fig. 4 zeigt, von einem hohlen Blechteil gebildet sein kann, das in nicht näher dargestellter Weise an der Unterseite der Pflückscheibe 8 befestigt ist.

Entlang dem in Drehrichtung 13 vorauslaufenden Längsrand 19 jedes Pflückspaltes 10 ist die Pflückscheibe 8 mit einer Kolbenauffangrinne 20 versehen, die wiederum insbesondere aus Fig. 4 ersichtlich ist und von einer Materialverformung des Plattenmaterials der Pflückscheibe 8 gebildet sein kann.

Zur Veränderung der Breite der Pflückspalte 10 kann die Pflückscheibe 8 oberseitig entlang einem der beiden Längsränder 17, 19 jedes Pflückspaltes 10 mit einer Stelleiste 21 versehen sein. Bei dem dargestellten Beispiel ist die Stelleiste 21 dem Längsrand 17 der Pflückspalte 10 zugeordnet. Nach einem Lösen von Verschraubungen 22 kann die Stelleiste 21, wie durch Pfeile in Fig. 3 angedeutet, zur Veränderung des Quermaßes der Pflückspalte 10 verschoben und durch erneutes Anziehen der Schrauben 22 in der eingestellten Position festgesetzt werden.

Die Pflückwalze zum Abziehen der Maisstengel nach unten und Abreißen der Maiskolben 5 von ihrem Stengel, während dieser durch einen Pflückspalt 10 geführt wird, ist von einer Zahnwalze 23 gebildet, die sich gemäß dem dargestellten Beispiel quer zur Fahrtrichtung 24 des Fahrzeugs 2 erstreckt und sämtlichen Pflückscheiben 8 und damit deren umlaufenden Pflückspalten 10 gemeinsam zugeordnet ist. Die Zahnwalze 23 erstreckt sich dabei durchgehend zwischen seitlichen Rahmenteilen des Grundrahmens 3 und ist in nicht näher dargestellter Weise mit einem Drehantrieb für ihren Umlauf um eine horizontale Drehachse 25 verbunden. Dabei verläuft die Zahnwalze 23 in Fahrtrichtung 24 vor der Drehachse 9 der Pflückscheibe 8 bzw. vor der vertikalen Querebene, die die Drehachsen 9 sämtlicher Pflückscheiben 8 enthält. Grundsätzlich ist auch eine hiervon abweichende Position der Zahnwalze 23 in Fahrtrichtung 24 hinter der die Drehachsen 9 der Pflückscheiben 8 enthaltenden Querebene möglich.

Die Zahnwalze 23 ist von einer Mehrzahl von Zahnkränzen 27 gebildet, die mit einem axialen Abstand 28 auf dem Walzenkörper 26 abgestützt sind. Der axiale Abstand 28 der Zahnkränze 27 beträgt dabei etwa das 0,5- bis 1-fache der axialen Länge des einzelnen Zahnkranzes 27.

Zwischen in Axialrichtung benachbarten Zähnen 29 der Zahnwalze 23 ist ein sich nach außen konisch erweiternder Einlaufspalt 30 für die Maisstengel gebildet. Hierzu sind die Zähne 29 in Richtung radial nach außen verjüngt ausgebildet.

Auf ihrer in Fahrtrichtung 24 nachlaufenden Seite ist der Zahnwalze 23, die im übrigen in nicht näher dargestellter Weise in Richtung auf die Pflückscheiben 8 federbeaufschlagt sein kann, ein gerätefester Abstreifer 31 zum Abreinigen der Zahnwalze 23 zugeordnet. Der Abstreifer 31 ist kammartig ausgebildet und greift mit seinen Zinken 32 in die Abstandsbereiche 28 zwischen den Zahnkränzen 27 ein, um die Zahnwalze 23 von Stengelteilen der Maispflanze zu befreien, die nach Aberntung der Maiskolben 5 auf dem Feld verbleiben, um später gehäckselt und umgepflügt zu werden.

Die die Pflückscheiben 8 oberseitig bereichsweise überdeckende Abdeckeinrichtung ist insbesondere aus den Fig. 1 und 2 ersichtlich und als Ganzes mit 33 bezeichnet. Die Abdeckeinrichtung 33 besteht aus einzelnen Abdeckplatten 34 und 35 in Verlängerung von bei Erntemaschinen der hier in Rede stehenden Art üblichen Teilerspitzen 37, die in nicht näher dargestellter Weise am Grundrahmen 3 abgestützt sind. Die Abdeckplatten 34 sind jeweils einzelnen äußeren Pflückscheiben 8 beidseits der vertikalen Längsmittelebene 11 zugeordnet, während die Abdeckplatte 35 eine gemeinsame Abdeckung für die beiden mittleren Pflückscheiben 8 bildet. Die Abdeckplatten 34, 35 bilden dabei Förderkanäle 36 mit einem bogenförmigen Verlauf über den Pflückscheiben 8. Der bogenförmige Verlauf der Förderkanäle 36 richtet sich nach der durch Bewegungspfeile in Fig. 1 angegebenen Drehrichtung der Pflückscheiben 8 für eine Förderung der abgepflückten Maiskolben 5 in die jeweilige Hälfte der Förderschnecke 6 zu beiden Seiten der vertikalen Längsmittelebene 11, wobei die beiden Förderschneckenhälften in an sich bekannter Weise die Maiskolben zur Mitte hin fördern, um von dort zum Erntefahrzeug 2 weiterbefördert zu werden.

Die Wirkungsweise der Pflückvorrichtung 4 sei nun anhand der Fig. 5 erläutert, die die wesentlichen Funktionsteile ausschnittsweise zeigt. Während der Vorbewegung des Erntegeräts 1 in Fahrtrichtung 24 wird zunächst der jeweilige Maisstengel 38 reihenunabhängig von den umlaufenden Pflückspalten 10 erfaßt und läuft zwischen zwei benachbarte Zähne 29 der Zahnwalze 23. Es erfolgt dabei eine Querförderung in Umlaufrichtung 13 der Pflückscheibe 8. Durch die Drehbewegung in Pfeilrichtung 13 und die gleichzeitige Vorwärtsbewegung in Fahrtrichtung 24 läuft der erfaßte Stengel 38 tiefer in den Pflückspalt 10 zu dessen geschlossenem innerem Ende hin ein. Gleichzeitig wird der Stengel 38 von einem weiteren Zahn 29 der in Pfeilrichtung 39 umlaufenden Zahnwalze 23 erfaßt und auf diese Weise im Verein mit der Querförderung in Richtung 13 an der Zahnwalze 23 verklemmt. Dabei wird der Maisstengel 38 sicher im Pflückspalt 10 gehalten, der in den Förderkanal 36 und damit in eine randseitig von den Seitenwänden 40 der Abdeckplatten 34,35 geschlossene Kammer eintritt. Gleichzeitig wird der Maisstengel 38 im Pflückspalt 10 bei der fortgesetzten Drehbewegung der Zahnwalze 23 in Drehrichtung 39 nach unten gezogen. Oberhalb des Pflückspaltes 10 wird dadurch der Maiskolben 5, der größere Abmessungen hat als der Pflückspalt 10, unterstützt durch die Druckleiste 18, abgepflückt, auf der Oberseite der Pflückscheibe 8 im jeweiligen Förderkanal 36 zwischen den Abdeckplatten 34, 35 aufgefangen und durch die fortgesetzte Drehbewegung der Pflückscheibe 8 in Pfeilrichtung 13 der Förderschnecke 6 zugeführt. Der Abstreifer 31 reinigt mit seinen Zinken 32 die Zahnwalze 23 von anhaftenden Pflanzenteilen, damit die Greif- und Klemmfunktion der Zähne 29 der Zahnwalze 23 im Erntebetrieb erhalten bleibt.

## Patentansprüche

1. Erntegerät zum Ernten von Maiskolben oder dgl. Körnerfrüchten für einen Anbau an ein selbstfahrendes landwirtschaftliches Erntefahrzeug (2), insbesonderen einen Mähdrescher oder Feldhäcksler, mit einer Pflückvorrichtung (4) für die Maiskolben, bestehend aus einer Kolbenhalteeinrichtung (8) mit zumindest einem Pflückspalt (10) und zumindest einer unterhalb des Pflückspaltes angeordneten Pflückwalze zum Abziehen der Maisstengel nach unten und Abreißen der Maiskolben von ihrem Stengel, **dadurch gekennzeichnet, daß** die Kolbenhalteeinrichtung von zumindest einer um eine Hochachse (9) drehbaren Pflückscheibe (8) mit zumindest einem in Drehrichtung (13) umlaufenden Pflückspalt (10) gebildet ist, der am Außenumfang der Pflückscheibe (8) offen ausmündet, und daß die Pflückscheibe (8) oberseitig von einer Abdeckeinrichtung (33) bereichsweise übergriffen ist, die zumindest einen Förderkanal (36) zum Abtransportieren der abgerissenen Maiskolben (5) zum Erntefahrzeug (2) hin bildet.

2. Erntegerät nach Anspruch 1, **dadurch gekennzeichnet, daß** der oder jeder Pflückspalt (10) in der Pflückscheibe (8) eine radiale Grundausrichtung aufweist.

3. Erntegerät nach Anspruch 1 oder 2, **dadurch gekennzeichnet, daß** der oder jeder Pflückspalt (10), ausgehend von seiner Ausmündung (12) am Außenumfang der Pflückscheibe (8), eine von einem durch den Ausmündungsbereich verlaufenden Radius (14) der Pflückscheibe (8) entgegen deren Drehrichtung (13) divergierende Ausrichtung aufweist.

4. Erntegerät nach einem der Ansprüche 1 bis 3, **dadurch gekennzeichnet, daß** die Ausmündung (12) des Pflückspaltes (10) eine in Drehrichtung (13) der Pflückscheibe (8) verlängerte Eingriffsnase (15) aufweist.

5. Erntegerät nach einem der Ansprüche 1 bis 4, **dadurch gekennzeichnet, daß** die Pflückscheibe (8) unterseitig entlang dem in Drehrichtung (13) nachlaufenden Längsrand (17) des oder jedes Pflückspaltes (10) mit einer Druckleiste (18) versehen ist.

6. Erntegerät nach einem der Ansprüche 1 bis 5, **dadurch gekennzeichnet, daß** die Pflückscheibe (8) oberseitig entlang dem in Drehrichtung (13) vorauslaufenden Längsrand (19) des oder jedes Pflückspaltes (10) mit einer Kolbenauffangrinne (20) versehen ist.

7. Erntegerät nach einem der Ansprüche 1 bis 6, **dadurch gekennzeichnet, daß** die Pflückscheibe (8) oberseitig entlang einem der beiden Längsränder (17,19) des oder jedes Pflückspaltes (10) mit einer Stelleiste (21) zur Veränderung der Pflückspaltbreite versehen ist.

8. Erntegerät nach einem der Ansprüche 1 bis 7, **gekennzeichnet durch** eine Mehrzahl von Pflückscheiben (8), deren Hochachsen (9) in einer gemeinsamen vertikalen Querebene der Pflückvorrichtung (4) angeordnet sind.

9. Erntegerät nach einem der Ansprüche 1 bis 8, **gekennzeichnet durch** eine geradzahlige Mehrzahl von Pflückscheiben (8), wobei gleiche Anzahlen von Pflückscheiben (8) beidseits der vertikalen Längsmittelebene (11) der Pflückvorrichtung (4) angeordnet sind.

10. Erntegerät nach Anspruch 8 oder 9, **dadurch gekennzeichnet, daß** die Pflückscheiben (8) auf der einen Seite der vertikalen Längsmittelebene (11) der Pflückvorrichtung (4) im Uhrzeigersinn und auf der anderen Seite entgegen dem Uhrzeigersinn umlaufen.

11. Erntegerät nach einem der Ansprüche 1 bis 10, **dadurch gekennzeichnet, daß** der oder jeder von der Abdeckeinrichtung (33) gebildete Förderkanal (36) einen bogenförmigen Verlauf entsprechend der Drehrichtung (13) der zugehörigen Pflückscheibe (8) aufweist.

12. Erntegerät nach einem der Ansprüche 1 bis 11, **dadurch gekennzeichnet, daß** die Pflückwalze von zumindest einer Zahnwalze (23) gebildet ist, die um eine horizontale Achse (25) drehbar im Grundrahmen (3) des Erntegerätes (2) abgestützt ist.

13. Erntegerät nach Anspruch 12, **dadurch gekennzeichnet, daß** die Zahnwalze (23) in einer Ausrichtung quer zur Fahrtrichtung (24) im Grundrahmen (3) abgestützt ist.

14. Erntegerät nach Anspruch 12 oder 13, **dadurch gekennzeichnet, daß** bei einer Ausbildung der Pflückscheibe(n) (8) mit mehreren gleichmäßig über den Umfang verteilten Pflückspalten (10) die Zahnwalze (23) sämtlichen umlaufenden Pflückspalten (10) gemeinsam zugeordnet ist.

15. Erntegerät nach einem der Ansprüche 12 bis 14, **dadurch gekennzeichnet, daß** die Zahnwalze (23)in Fahrtrichtung (24) vor der Drehachse (9) der Pflückscheibe(n) (8) verläuft.

16. Erntegerät nach einem der Ansprüche 12 bis 15, **dadurch gekennzeichnet, daß** zwischen in Axialrichtung benachbarten Zähnen (29) der Zahnwalze (23) ein sich nach außen konisch erweiternder Einlaufspalt (30) für die Maisstengel (38) gebildet ist.

17. Erntegerät nach Anspruch 16, **dadurch gekennzeichnet, daß** die Zähne (29) der Zahnwalze (23) nach außen verjüngt sind.

18. Erntegerät nach einem der Ansprüche 12 bis 17, **dadurch gekennzeichnet, daß** die Zahnwalze (23) von einer Mehrzahl von mit axialem Abstand (28) auf dem Walzenkörper (26) abgestützten Zahnkränzen (27) gebildet ist.

19. Erntegerät nach Anspruch 18, **dadurch gekennzeichnet, daß** der axiale Abstand (28) der Zahnkränze (27) etwa das 0,5 bis 1-fache der axialen Länge des einzelnen Zahnkranzes (27) beträgt.

20. Erntegerät nach einem der Ansprüche 12 bis 19, **dadurch gekennzeichnet, daß** die Zahnwalze (23) in Richtung auf die Pflückscheibe(n) (8) federbeaufschlagt ist.

21. Erntegerät nach einem der Ansprüche 12 bis 20, **dadurch gekennzeichnet, daß** der Zahnwalze (23) auf ihrer in Fahrtrichtung (24) nachlaufenden Seite ein gerätefester Abstreifer (31) zum Abreinigen der Zahnwalze (23) zugeordnet ist.

22. Erntegerät nach den Ansprüchen 18 und 21, **dadurch gekennzeichnet, daß** der Abstreifer (31) kammartig mit in die Abstandsbereiche (28) zwischen den Zahnkränzen (27) eingreifenden Zinken (32) ausgebildet ist.

## Claims

1. A harvesting device for harvesting maize cobs or like cereals, for mounting on a self-propelled agricultural harvesting vehicle (2), especially a combine harvester or forage harvester, with a picking device (4) for the maize cobs, consisting of a cob holding device (8) with at least one picking gap (10) and at least one picking roller arranged below the picking gap for pulling the maize stalks down and ripping the maize cobs off their stalk, **characterized in that** the cob holding device is formed by at least one picking disc (8) rotatable about an upright shaft (9), with at least one picking gap (10) circulating in the direction of rotation (13) and opening at the outer periphery of the picking disc (8), and **in that** the picking disc (8) is regionally engaged over the upper side by a cover device (33), which forms at least one conveyor channel (36) for transporting the ripped off maize cobs (5) to the harvesting vehicle (2).

2. A harvesting device according to claim 1, **characterized in that** the or each picking gap (10) in the picking disc (8) has a radial basic alignment.

3. A harvesting device according to claim 1 or 2, **characterized in that** the or each picking gap (10) has, starting from its mouth (12) at the outer periphery of the picking disc (8), an alignment diverging against its direction of rotation (13) from a radius (14) of the picking disc (8) running through the mouth region.

4. A harvesting device according to any of claims 1 to 3, **characterized in that** the mouth (12) of the picking gap (10) has an engagement nose (15) extended in the direction of rotation (13) of the picking disc (8).

5. A harvesting device according to any of claims 1 to 4, **characterized in that** the picking disc (8) is provided on the underside with a pressure bar (18) running along the longitudinal edge (17) trailing in the direction of rotation (13) of the or each picking gap (10).

6. A harvesting device according to any of claims 1 to 5, **characterized in that** the picking disc (8) is provided on the upper side with a cob catching channel (20) running along the longitudinal edge (19) leading in the direction of rotation (13) of the or each picking gap (10).

7. A harvesting device according to any of claims 1 to 6, **characterized in that** the picking disc (8) is provided on the upper side with an adjustment strip (21) running along one of the two longitudinal edges (17, 19) of the or each picking gap (10), for altering the picking gap width.

8. A harvesting device according to any of claims 1 to 7, **characterized by** a plurality of picking discs (8) whose upright axes (9) are arranged in a common vertical, transverse plane of the picking device (4).

9. A harvesting device according to any of claims 1 to 8, **characterized by** an even number of picking discs (8), wherein equal numbers of picking discs (8) are arranged on the two sides of the vertical, longitudinal central plane (11) of the picking device (4).

10. A harvesting device according to claim 9 or 10, **characterized in that** the picking discs (8) on the one side of the vertical, longitudinal central plane (11) of the picking device (4) rotate clockwise and on the other side anticlockwise.

11. A harvesting device according to any of claims 1 to 10, **characterized in that** the or each conveyor channel (36) formed by the cover device (33) has an arcuate course corresponding to the direction of rotation (13) of the associated picking disc (8).

12. A harvesting device according to any of claims 1 to 11, **characterized in that** the picking roller is formed by at least one toothed roller (23), which is supported rotatably about a horizontal axis (25) in the base frame (3) of the harvesting device (2).

13. A harvesting device according to claim 12, **characterized in that** the toothed roller (23) is supported in the base frame (3) in an alignment transverse to the direction of travel (24).

14. A harvesting device according to claim 12 or 13, **characterized in that**, in a formation of the picking disc(s) (8) with a plurality of picking gaps (10) distributed uniformly over the periphery, the toothed roller (23) is associated in common with all of the circulating picking gaps (10).

15. A harvesting device according to any of claims 12 to 14, **characterized in that** the toothed roller (23) runs ahead of the axis of rotation (9) of the picking disc(s) (8) in the direction of travel.

16. A harvesting device according to any of claims 12 to 15, **characterized in that** an infeed gap (30) for the maize stalks (38) widening conically to the outside is formed between teeth (29) of the toothed roller (23) adjacent in the axial direction.

17. A harvesting device according to claim 16, **characterized in that** the teeth (29) of the toothed roller (23) are tapered to the outside.

18. A harvesting device according to any of claims 12 to 17, **characterized in that** the toothed roller (23) is formed from a plurality of toothed rings (27) supported with an axial spacing (28) on the roller body (26).

19. A harvesting device according to claim 18, **characterized in that** the axial spacing (28) of the toothed rings (27) amounts to about 0.5 to 1 times the axial length of an individual toothed ring (27).

20. A harvesting device according to any of claims 12 to 19, **characterized in that** the toothed roller (23) is spring biased in the direction of the picking disc(s) (8).

21. A harvesting device according to any of claims 12 to 20, **characterized in that** a stripper (31) for cleaning the toothed roller (23), fixed relative to the device, is associated with the toothed roller (23) on its trailing side in the direction of travel (24).

22. A harvesting device according to claims 18 and 21, **characterized in that** the stripper (31) is of comb-like form with tines (32) engaging in the spacing regions (28) between the toothed rings (27).

## Revendications

1. Appareil à moissonner des épis de maïs ou grains similaires, destiné à être monté sur un véhicule de récolte (2) agricole automoteur, notamment une moissonneuse-batteuse ou ramasseuse-hacheuse, comprenant un dispositif de cueillette (4) des épis de maïs, présentant une installation de tenue d'épis (8) avec au moins une fente de cueillette (10) et au moins un cylindre de cueillette disposé sous la fente de cueillette pour tirer les tiges de maïs vers le bas et arracher les épis de maïs de leur tiges, **caractérisé en ce que** l'installation de tenue d'épis est formée par au moins un disque de cueillette (8) rotatif autour d'un axe vertical (9) comprenant au moins une fente de cueillette (10) circulant dans le sens de rotation (13), qui débouche de manière ouverte à la circonférence extérieure du disque de cueillette (8), et **en ce que** le disque de cueillette (8) est recouvert, par zones et au niveau de sa face supérieure, par une installation de couverture (33), qui forme au moins un canal de transport (36) pour évacuer les épis de maïs arrachés (5) vers le véhicule de récolte (2).

2. Appareil à moissonner selon la revendication 1, **caractérisé en ce que** la ou chacune des fentes de cueillette (10) présentent une orientation de base radiale dans le disque de cueillette (8).

3. Appareil à moissonner selon la revendication 1 ou 2, **caractérisé en ce que** la ou chacune des fentes de cueillette (10), à partir de son orifice (12) au niveau de la circonférence extérieure du disque de cueillette (8), présente une orientation divergent d'un rayon (14) s'étendant à travers la zone d'orifice du disque de cueillette (8) en sens opposé au sens de rotation de ce dernier.

4. Appareil à moissonner selon l'une des revendications 1 à 3, **caractérisé en ce que** l'orifice (12) de la fente de cueillette (10) présente un nez d'intervention (15) prolongé dans le sens de rotation (13) du disque de cueillette (8).

5. Appareil à moissonner selon l'une des revendications 1 à 4, **caractérisé en ce que** le disque de cueillette (8) est muni d'une barre de pression (18) située à la face inférieure le long du bord longitudinal (17) arrière dans le sens de rotation (13) de la ou de chacune des fentes de cueillette (10).

6. Appareil à moissonner selon l'une des revendications 1 à 5, **caractérisé en ce que** le disque de cueillette (8) est muni d'une goulotte de récupération d'épis (20) située à la face supérieure le long du bord longitudinal (19) avant dans le sens de rotation (13) de la ou de chacune des fentes de cueillette (10).

7. Appareil à moissonner selon l'une des revendications 1 à 6, **caractérisé en ce que** le disque de cueillette (8) est muni d'une barre de réglage (21) pour modifier la largeur de la fente de cueillette, située à la face supérieure le long de l'un des bords longitudinaux (17, 19) de la ou des fentes de cueillette (10).

8. Appareil à moissonner selon l'une des revendications 1 à 7, **caractérisé par** une pluralité de disques de cueillette (8) dont les axes verticaux (9) sont disposés dans un plan transversal vertical commun du dispositif de cueillette (4).

9. Appareil à moissonner selon l'une des revendications 1 à 8, **caractérisé par** une pluralité paire de disques de cueillette (8), des nombres identiques de disques de cueillette (8) étant disposés de part et d'autre du plan central longitudinal (11) du dispositif de cueillette (4).

10. Appareil à moissonner selon la revendication 8 ou 9, **caractérisé en ce que** les disques de cueillette (8) circulent d'un côté du plan central longitudinal vertical (11) du dispositif de cueillette (4) dans le sens des aiguilles d'une montre, et de l'autre côté contre le sens des aiguilles d'une montre.

11. Appareil à moissonner selon l'une des revendications 1 à 10, **caractérisé en ce que** le ou chacun des canaux de transport (36) formés par l'installation de couverture (33) présente une allure en forme d'arc selon le sens de rotation (13) du disque de cueillette (8) associé.

12. Appareil à moissonner selon l'une des revendications 1 à 11, **caractérisé en ce que** le cylindre de cueillette est formé par au moins un cylindre denté (23), qui s'appuie en rotation autour d'un axe horizontal (25) dans le bâti (3) de l'appareil à moissonner (2).

13. Appareil à moissonner selon la revendication 12, **caractérisé en ce que** le cylindre denté (23) s'appuie dans le bâti (3) dans une direction transversale au sens de déplacement (24).

14. Appareil à moissonner selon la revendication 12 ou 13, **caractérisé en ce que** dans une configuration du (des) disques de cueillette (8) avec plusieurs fentes de cueillette (10) régulièrement réparties sur la circonférence, le cylindre denté (23) est associé à l'ensemble des fentes de cueillette (10) périphériques.

15. Appareil à moissonner selon l'une des revendications 12 à 14, **caractérisé en ce que** le cylindre denté (23) s'étend dans le sens de déplacement (24) en amont de l'axe de rotation (9) du (des) disque(s) de cueillette (8).

16. Appareil à moissonner selon l'une des revendications 12 à 15, **caractérisé en ce qu'**entre dents (29) du cylindre denté (23) voisines dans le sens axial, une fente d'entrée (30) s'évasant de manière conique vers l'extérieur est formée pour les tiges de maïs (38).

17. Appareil à moissonner selon la revendication 16, **caractérisé en ce que** les dents (29) du cylindre denté (23) sont effilées vers l'extérieur.

18. Appareil à moissonner selon l'une des revendications 12 à 17, **caractérisé en ce que** le cylindre denté (23) est formé par une pluralité de couronnes dentées (27) s'appuyant à distance axiale (28) sur le corps de cylindre (26).

19. Appareil à moissonner selon la revendication 18, **caractérisé en ce que** la distance axiale (28) des couronnes dentées (27) est sensiblement de 0,5 à 1 fois la longueur axiale d'une couronne dentée (27).

20. Appareil à moissonner selon l'une des revendications 12 à 19, **caractérisé en ce que** le cylindre denté (23) est sollicité par un ressort en direction vers le(s) disque(s) de cueillette (8).

21. Appareil à moissonner selon l'une des revendications 12 à 20, **caractérisé en ce qu'**une tringle de débourrage (31) solidaire de l'appareil est associé au cylindre denté (23) côté arrière de celui-ci dans le sens du déplacement (24) pour nettoyer le cylindre denté (23).

22. Appareil à moissonner selon les revendications 18 et 21, **caractérisé en ce que** la tringle de débourrage (31) est formée à la manière d'un peigne avec des dents (32) s'engrenant dans les zones de distance (28) entre les couronnes dentées (27).
